# EUROPÄISCHE PATENTANMELDUNG

(11) **EP 1 587 189 A1**
(43) Veröffentlichungstag der Anmeldung: **19.10.2005**
(21) Anmeldenummer: 05007015.0
(22) Anmeldetag: 31.03.2005
(51) Int. Cl.: H02B 1/052

(54) **Schnellbefestigung für Reiheneinbaugeräte**

(30) Priorität: 16.04.2004 DE 102004019173
(71) Anmelder: ABB PATENT GmbH, 68526 Ladenburg (DE)
(72) Erfinder: Majewski, Joachim, 69221 Dossenheim (DE)
(74) Vertreter: Miller, Toivo

(57) **Zusammenfassung**

Es wird eine Schnellbefestigung zum Aufschnappen eines elektrischen Installationsgerätes (100), insbesondere eines Leitungsschutzschalters, auf eine Hutprofiltragschiene (108) beschrieben, mit einer Ausnehmung (104) an der Befestigungsseite (88) des Installationsgerätes (100) und mit einem in einer ersten Raststellung, der Befestigungslage, federnd in die Ausnehmung (104) gedrückten und in der ersten Raststellung eine über die Geräteschmalseite (90) hinausragende Ausladung L aufweisenden Schieber (10), der in aufgerastetem Zustand mit einer beweglichen Nase (72) hinter eine Längskante der Hutprofiltragschiene (108) greift. Sie ist dadurch gekennzeichnet, dass der Schieber (10) in einer zweiten Raststellung in einer Entnahmelage so verrastbar ist, dass das Installationsgerät (100) von der Hutprofilschiene (108) entnommen werden kann, und dass in einer dritten Raststellung der Schieber (10) in die Ausnehmung (104) hinein verschiebbar ist, so dass in der dritten Raststellung die Ausladung (L") des Schiebers auf ein, eine Montage des Installationsgerätes auf einem Adapter (112) nicht behinderndes, Maß reduziert ist.

## Beschreibung

Die Erfindung betrifft eine Schnellbefestigung zum Aufschnappen eines elektrischen Installationsgerätes, insbesondere eines Leitungsschutzschalters, auf eine Hutprofiltragschiene, gemäß dem Oberbegriff des Anspruchs 1.

Gattungsgemäße Schnellbefestigungen sind an der Befestigungsseite eines elektrischen Installationsgerätes vorgesehen, wobei das Installationsgerät an seiner Befestigungsseite eine Ausnehmung aufweist, an deren einen Seitenwand eine feststehende Nase und an deren anderer Seitenwand eine an einem Schieber angeordnete, bewegliche Nase vorgesehen sind, die aufeinander zugerichtet sind, wobei der Schieber gegen den Druck einer Feder nach innen gedrückt wird und so die an ihm angeformte bewegliche Nase nach innen in die Ausnehmung hineindrückt. Zur Befestigung des Installationsschaltgerätes an einer Hutprofiltragschiene wird eine der Längskanten der Hutprofiltragschiene hinter die feststehende Nase gedrückt und durch Verschwenken des Installationsgerätes um diese Kante die andere Kante hinter die bewegliche Nase gerastet. Der Schieber kann eine die Geräteschmalseite überragende und somit von außen zugängliche Ausladung aufweisen, in der eine Durchführung vorgesehen sein kann, die den Eingriff eines Betätigungswerkzeuges, beispielsweise eines Schraubendrehers, erlaubt.

Um das Installationsgerät von der Hutprofilschiene wieder zu entfernen, wird mit dem Betätigungswerkzeug der Schieber entgegen dem Druck der Feder in die der festen Nase entgegengesetzte Richtung weggezogen, bis die bewegliche Nase die Längskante der Hutprofiltragschiene wieder freigibt, und das Installationsgerät durch Herausschwenken von der Hutprofiltragschiene entfernt werden kann.

Gattungsgemäße Installationsgeräte sollen in manchen Anwendungsfällen nicht direkt auf die Hutprofiltragschiene, sondem zunächst auf ein Anbauteil, etwa einen Adapter, montiert werden, und der Adapter mit darauf montiertem Installationsgerät wird dann beispielsweise direkt auf Sammelschienen in einer Installationsanlage angebracht. Für die Befestigung des Installationsgerätes auf dem Adapter umfasst dieser spezielle Haltevorrichtungen, etwa Schnapphaken, so dass die Schnellbefestigung für die Montage des Installationsgerätes auf dem Adapter nicht benötigt wird. Heute bekannte Schnellbefestigungen müssen für die Adaptermontage des Installationsgerätes entfernt werden, da das Installationsgerät wegen der Blockierung der Haltevorrichtungen des Adapters durch die störende Ausladung des Schiebers sonst nicht auf dem Adapter befestigt werden kann.

Es ist daher die Aufgabe der vorliegenden Erfindung, eine gattungsgemäße Schnellbefestigung zu schaffen, mit der das Installationsgerät auf Hutprofilschienen schnell und einfach montiert und demontiert werden kann, und gleichzeitig ohne Entfernen der Schnellbefestigung für die Adaptermontage auf allen gängigen Adaptern geeignet ist.

Die Aufgabe wird gelöst durch die kennzeichnenden Merkmale des Anspruchs 1.

Erfindungsgemäß also ist der Schieber in einer zweiten Raststellung in einer Entnahmelage so verrastbar, dass das Installationsgerät von der Hutprofilschiene entnommen werden kann, und in einer dritten Raststellung ist der Schieber in die Ausnehmung hinein verschiebbar, so dass in der dritten Raststellung die Ausladung des Schiebers auf ein, die Montage des Installationsgerätes auf einem Adapter nicht behinderndes, Maß reduziert ist.

Die zweite Raststellung bietet bei der Demontage den Vorteil, dass der Schieber nicht von Hand in der Entnahmestellung gehalten werden muß. Durch Hinzufügen der dritten Raststellung wird die Adaptermontage ohne Entfernen des Schiebers möglich, da nun der Schieber mit den Haltevorrichtungen des Adapters nicht mehr kollidieren kann.

Der Schieber kann einen rechteckigen Rahmen mit zwei Längsstegen, einem an einer ersten Schmalseite angeformten Nasenkörper, einem an der anderen Schmalseite angeformten endständigen Quersteg umfassen, und so dass der Schieber in etwa eine L-förmige Längsschnittkontur aufweist, wobei der Rahmen den langen Schenkel und der Nasenkörper den kurzen Schenkel bildet.

Weiterhin kann der Schieber mit daran angeformten, parallel zur Befestigungsebene die Längsstege überragenden Laschen in parallel zur Befestigungsebene an der Gerätebefestigungsseite verlaufenden Längsnuten längsverschieblich geführt sein.

In einer besonders vorteilhaften Ausgestaltungsform der Erfindung ist der Schieber mit angeformten Laschen in vorderen und hinteren Längsnuten an der Befestigungsseite des Installationsgerätes längsverschieblich geführt. Die vorderen Längsnuten verlaufen dabei in einer zur Befestigungsebene parallelen vorderen Nutebene, und die hinteren Längsnuten verlaufen im Abstand a dazu in einer ebenfalls zur Befestigungsebene parallelen hinteren Nutebene. Die Laschen sind in einer zur Befestigungsebene parallelen vorderen, und einer im Abstand a dazu ebenfalls zur Befestigungsebene parallelen hinteren Schieberebene an den Schieber angeformt.

Vorteilhafterweise ist der Schieber so gestaltet, dass die der Gerätebefestigungsseite zugewandte Begrenzungsfläche des Nasenkörpers der beweglichen Nase in der vorderen Schieberebene liegt, und dass die der Gerätebefestigungsseite zugewandte Begrenzungsfläche des Rahmens in der hinteren Schieberebene liegt.

An dem Schieber kann in der vorderen Schieberebene eine erste, der Gerätebefestigungsseite zugewandte Rastnase und in der hinteren Schieberebene eine zweite, der Gerätebefestigungsseite zugewandte Rastnase angeformt sein.

Korrespondierend mit der zweiten Rastnase des Schiebers kann an der Gerätebefestigungsseite, dem Schieber zugewandt und in Längsrichtung hintereinanderliegend, eine erste, der Geräteschmalseite zugewandte, und eine zweite, der Ausnehmung zugewandte Geräterastnase angeformt sein, derart dass bei Verrastung der ersten Schieberrastnase mit der ersten Geräterastnase der Schieber in der zweiten Raststellung, der Entnahmelage, verrastet ist, und bei Verrastung der ersten Schieberrastnase mit der zweiten Geräterastnase der Schieber in der ersten Raststellung, der Befestigungslage, verrastet ist.

Korrespondierend mit der ersten Rastnase des Schiebers kann in einer sehr vorteilhaften Ausgestaltung der Erfindung an der Gerätebefestigungsseite, dem Schieber zugewandt, eine Tasche eingebracht sein, in der die erste Rastnase längsverschieblich gleitet, derart dass der Längsverschiebebereich des Schiebers auf den Bereich der Längserstreckung der Tasche begrenzt ist.

In einer weiteren sehr vorteilhaften Ausgestaltung korrespondieren die erste und zweite Rastnase auf dem Schieber, die erste und zweite Gerätenase, die Tasche und die in den vorderen und hinteren Längsnuten verlaufenden vorderen und hinteren Laschen so miteinander, dass der Schieber in eine dritte Raststellung bringbar ist, in der die Ausladung des Schiebers auf ein die Adaptermontage des Installationsgerätes nicht behinderndes Maß reduziert ist. Die zweite Rastnase befindet sich dann zwischen der zweiten Gerätenase und der Ausnehmung, und die bewegliche Nase ragt in die Ausnehmung hinein. Der Längsverschiebebereich des Schiebers in die Ausnehmung hinein ist durch den Längserstreckungsbereich der Tasche so begrenzt, dass die vorderen und hinteren Laschen die vorderen und hinteren Längsnuten nicht verlassen können. Mit anderen Worten, der Schieber ist in der dritten Raststellung in der Ausnehmung versenkt und unverlierbar festgehalten.

Weitere vorteilhafte Ausgestaltungen und Verbesserungen der Erfindung und weitere Vorteile sind den weiteren Unteransprüchen zu entnehmen.

Anhand der Zeichnungen, in denen eine Ausführungsform der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: einen Längsschnitt durch einen erfindnungsgemäßen Schieber,
- Fig. 2: eine Aufsicht auf den erfindungsgemäßen Schieber nach Fig. 1,
- Fig. 3: eine Seitenansicht des Schiebers nach Fig. 2 aus Richtung A',
- Fig. 4: eine Seitenansicht des Schiebers nach Fig. 2 auch Richtung B',
- Fig. 5: einen Längsschnitt der Befestigungsseite eines Installationsgerätes mit erfindungsgemäßer Schnellbefestigung, es ist nur der die Schnellbefestigung betreffende Teil gezeigt,
- Fig. 6: eine Seitenansicht der Befestigungsseite des Installationsgerätes nach Fig. 5 aus Richtung A,
- Fig. 7: eine Seitenansicht der Befestigungsseite des Installationsgerätes nach Fig. 5 aus Richtung B,
- Fig. 8: einen Längsschnitt einer erfindungsgemäßen Schnellbefestigung, mit montiertem Schieber in der Entnahmestellung,
- Fig. 9: einen Längsschnitt einer erfindungsgemäßen Schnellbefestigung, mit montiertem Schieber in der ersten Raststellung, und
- Fig. 10: einen Längsschnitt einer erfindungsgemäßen Schnellbefestigung, mit montiertem Schieber in der dritten Raststellung.

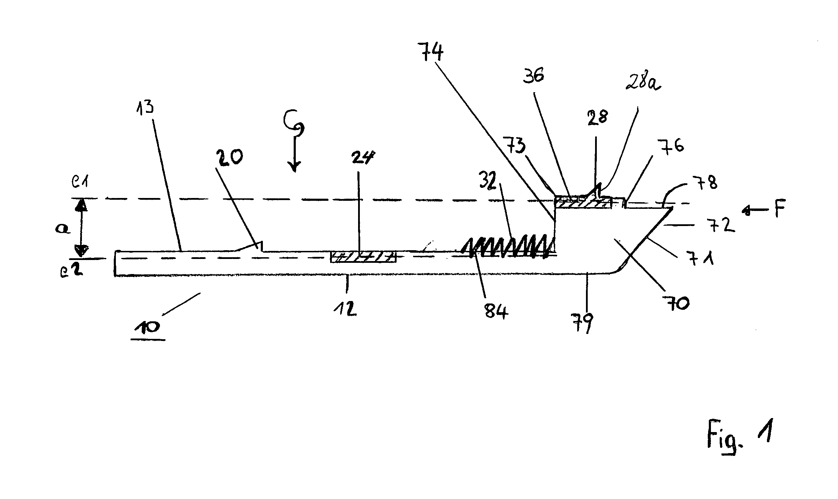

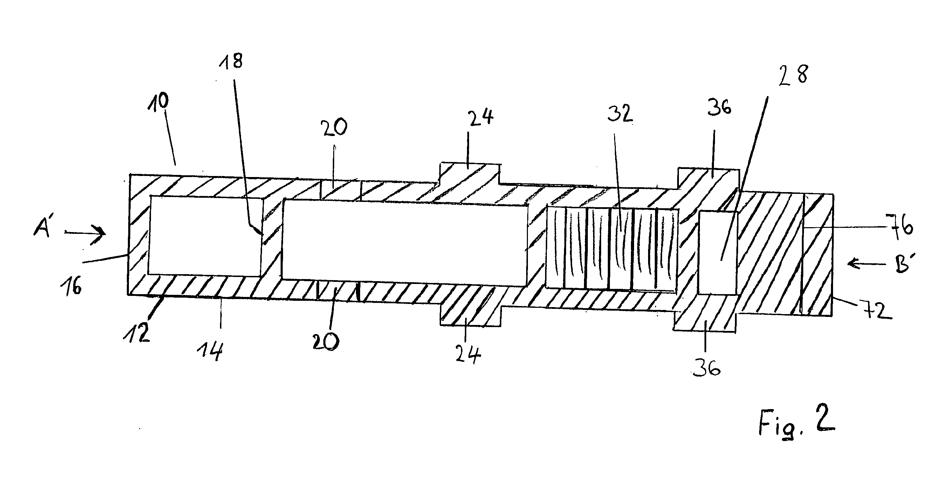

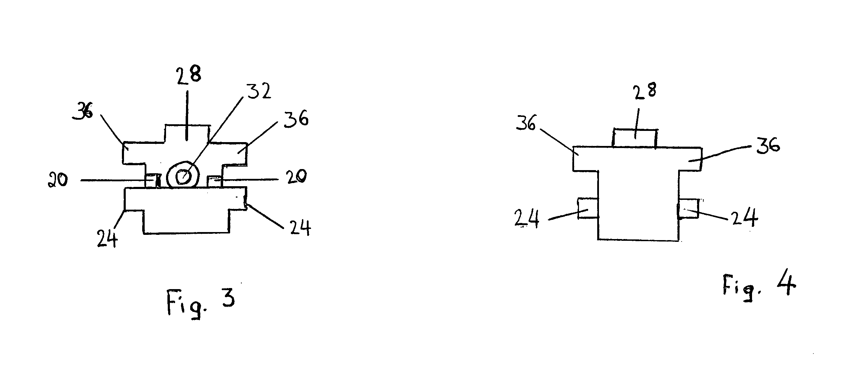

Der erfindungsgemäße Schieber 10 soll nun anhand der Figuren 1 bis 4 beschrieben werden. Die Figuren 1 bis 4 zeigen den Schieber 10 aus unterschiedlichen Perspektiven. Fig. 1 zeigt einen erfindungsgemäßen Schieber 10 mit angeformter beweglicher Nase 72 im Längsschnitt, Fig. 2 zeigt den Schieber in der Aufsicht, die Fig. 3 und 4 in Seitenansichten aus Richtung A' und B'. Gleiche Bezugsziffern bezeichnen in den Figuren dieselben Elemente.

Der Schieber 10 umfasst einen rechteckigen Rahmen 12 mit zwei Längsstegen 14, die an einer- in der Figur 2 der linken - Schmalseite durch einen endständigen Quersteg 16 und im linken Drittel zusätzlich durch einen innenliegenden Quersteg 18 verbunden sind.

Die mit G bezeichnete Seite des Schiebers ist die - bei bestimmungsgemäßem Anbau an ein Installationsschaltgerät - der Befestigungsseite des Installationsgerätes zugewandte Seite. Durch die der Gerätebefestigungsseite zugewandte Begrenzungsfläche 13 des Rahmens 12 wird eine hintere Schieberebene e2 festgelegt.

Die mit F bezeichnete Schmalseite ist die - bei bestimmungsgemäßem Anbau an ein Installationsschaltgerät mit einer Schnellbefestigungsausnehmung und einer darin angebrachten festen Nase- der festen Nase zugewandte Seite.

An der Schmalseite F ist die bewegliche Nase 72 angeformt. Sie umfasst einen an den Rahmen 12 angeformten Nasenkörper 70, mit einer Basisseite 79, einer der Gerätebefestigungsseite zugewandten Nasenbegrenzungsfläche 73, im Folgenden auch Nasenoberseite genannt, welche die Basisseite an der Schmalseite F in Richtung auf die feste Nase hin nach außen überragt, einer der linken Schmalseite zugewandte, senkrechte zur Ebene e2 verlaufende Seite 74, auch als Stützseite bezeichnet, und einer Nasenschräge 71, die die Basisseite 79 mit der Nasenoberseite 73 verbindet. Insgesamt weist der Rahmen 12 mit dem angeformten Nasenkörper 70 in etwa eine L-förmige Querschnittskontur auf. Der Rahmen 12 bildet dabei den langen Schenkel und der Nasenkörper 70 den kurzen Schenkel. An der rechten oberen Nasenspitze, wo die Nasenschräge 71 mit der Nasenoberseite 73 zusammentrifft, ist eine Ausnehmung eingebracht, so dass senkrechte Haltekante 76 und eine Haltefläche 78 entsteht.

Durch die Nasenoberseite 73 ist eine parallel zur hinteren Schieberebene e2 und in einem Abstand a zu dieser verlaufende vordere Schieberebene e1 festgelegt.

An der Nase 72 ist auf der oberen Nasenfläche 73 eine erste, der Gerätebefestigungsseite 88 zugewandte, Rastnase 28 in Form einer Rampe deren steil zur Fläche 73 abfallende Wand 28 a zur Nase 72 hin ausgerichtet ist, angeformt. Auf den Längsstegen 14 sind in der hinteren Schieberebene e2 zwei zweite, der Gerätebefestigungsseite 88 zugewandte, rampenförmige Rastnasen 20 angeformt. Deren senkrechte Halteflächen liegen in einer gemeinsamen Ebene senkrecht zur Längserstreckungsrichtung des Schiebers 10 und sind zur der Nase 72 hingerichtet.

An den Längsstegen 14 des Schiebers 10 sind in der hinteren Schieberebene e2 liegende, nach außen weisende Laschen 24 angeformt. An der Nasenoberseite 73 sind in der vorderen Schieberebene e1 liegende, nach außen weisende Laschen 36 angeformt.

Angrenzend an die Halteseite 74 der Nase 72 ist in den Rahmen 12 des Schiebers 10 eine rechteckige Feder-Haltetasche 84 eingebracht. In dieser ist eine Schraubendruckfeder 32 gehalten. Die Schraubendruckfeder 32 ist in entspanntem Zustand etwas länger als die Haltetasche 84, so dass sie, in die Tasche 84 eingesetzt, sich darin selbst festklemmt:

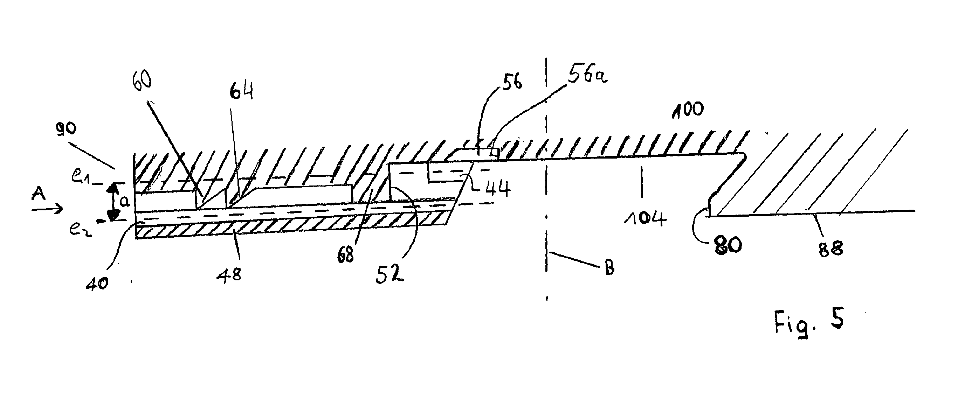

Der den Schieber 10 aufnehmende Teil der Gerätebefestigungsseite 88 des Installationsgerätes 100 wird nun im folgenden anhand der Figuren 5 bis 7 beschrieben, wobei die Figuren unterschiedliche Perspektiven zeigen. Fig. 5 zeigt einen Längsschnitt der Befestigungsseite eines Installationsgerätes mit erfindungsgemäßer Schnellbefestigung, die Figuren 6 und 7 zeigen Seitenansichten aus den Richtungen B bzw. A. Von dem Installationsgerät 100 ist nur der die Schnellbefestigung betreffende Teil der Befestigungsseite 88 gezeigt, die restlichen Teile des Installationsgerätes sind dem jeweiligen Gerätetyp entsprechend hinzuzudenken.

An der Befestigungsseite 88 weist das Installationsgerät 100 eine Ausnehmung 104 auf, an deren einen Seitenwand eine feststehende Nase 80 angebracht ist. An der der feststehenden Nase gegenüberliegenden Seite sind an der Befestigungsseite 88 des Installationsgerätes 100 vordere und hintere Längsnuten 44, 40 eingebracht. Die vorderen Längsnuten 44 verlaufen dabei in einer zur Befestigungsebene parallelen vorderen Nutebene e1', und die hinteren Längsnuten 40 verlaufen im Abstand a dazu in einer ebenfalls zur Befestigungsebene parallelen hinteren Nutebene e2'.

Die Längsnuten sind durch parallele Hinterschneidungen in den Gehäusewänden realisiert. Die Mittellinie M in den Fig. 6 und 7 zeigt, dass das Gehäuse des Installationsschaltgerätes aus zwei Gehäuseschalenteilen zusammengesetzt ist. Die vorderen und hinteren Längsnuten 44, 40 sind in jedem der beiden Gehäuseschalenteile eingebracht und ergänzen sich beim Zusammenbau des Gehäuses aus den beiden Schalen zu der den Schieber 10 aufnehmenden Nutenanordnung.

Die hinteren Längsnuten 44 sind durchgängig zwischen der Schmalseite 90 und der, der festen Nase 80 gegenüberliegenden, Seite der Ausnehmung 104 ausgebildet. Die vorderen Längsnuten 44 sind taschenartig von der, der festen Nase 80 gegenüberliegenden, Seite der Ausnehmung 104 nur ein Stück weit in Richtung auf die Schmalseite 90 hin eingebracht.

An der Gerätebefestigungsseite 88 sind, der hinteren Nut 40 zugewandt und in Längsrichtung hintereinanderliegend, eine erste, der Geräteschmalseite zugewandte, und eine zweite, der Ausnehmung zugewandte, jeweils sägezahnförmige, Geräterastnase 60, 64 angeformt. Sie sind in einer solchen Lage angeformt, dass - wie in den Fig. 8 bis 10 deutlich wird -, bei Einsatz des Schiebers 10 in den Nuten 40, 44, bei Verrastung der ersten Schieberrastnase 20 mit der ersten Geräterastnase 60 der Schieber 10 in der zweiten Raststellung, der Entnahmelage, verrastet ist, und bei Verrastung der ersten Schieberrastnase 20 mit der zweiten Geräterastnase 64 der Schieber 10 in der ersten Raststellung, der Befestigungslage, verrastet ist.

Korrespondierend mit der ersten Rastnase des Schiebers bei bestimmungsgemäßem Einbau ist an der Gerätebefestigungsseite 88, dem Schieber zugewandt, eine Tasche 56 eingebracht, in der die erste Rastnase 28 des Schiebers 10 längsverschieblich gleiten kann.

Zwischen der zweiten Rastnase 64 und der Ausnehmung 104 ist an der Gerätebefestigungsseite 88 ein etwa rechteckiger Vorsprung 68 angeformt, an dessen der Ausnehmung 104 zugewandten Seitenfläche - auch als Feder-Anschlag 52 bezeichnet - sich die Zylinderdruckfeder 32 bei bestimmungsgemäßem Einbau des Schiebers 10 abstützt.

Das funktionale Zusammenspiel von Schieber und Gerätebefestigungsseite bei bestimmungsgemäßem Einbau des Schiebers in den unterschiedlichen Rastpositionen wird nun anhand der Figuren 8 bis 10 beschrieben. In den Fig. 8 bis 10 bezeichnen gleiche Bezugsziffern die gleichen Elemente wie in den Fig. 1 bis 7.

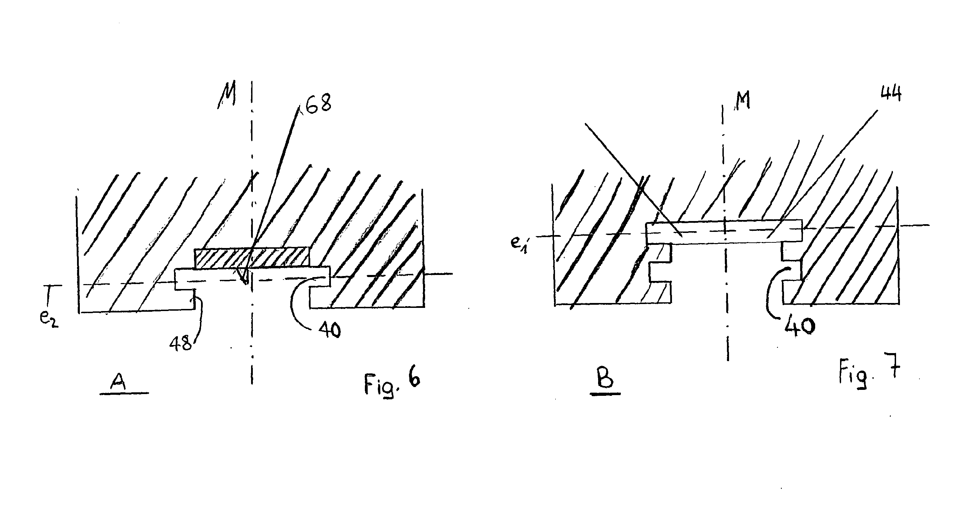

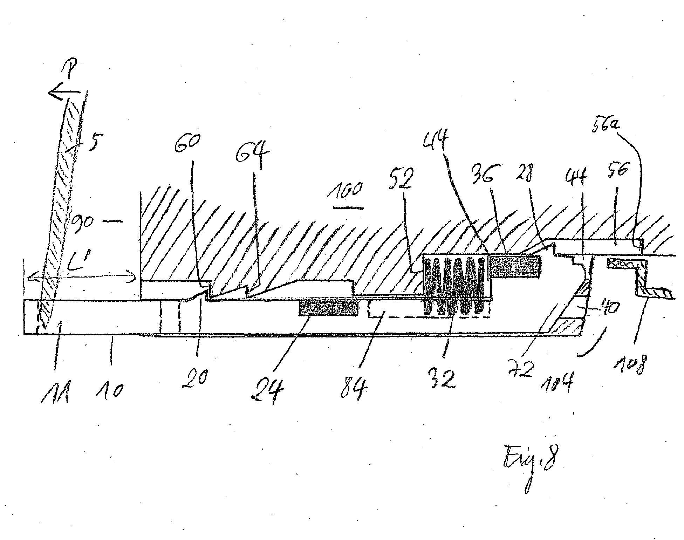

Fig. 9 zeigt einen Längsschnitt einer erfindungsgemäßen Schnellbefestigung, wobei sich der bestimmungsgemäß montierte Schieber 10 in der ersten Raststellung befindet. In der ersten Raststellung ist die erste Rastnase 20 des Schiebers 10 mit der zweiten Geräterastnase 64 verrastet. Der Schieber ist dadurch in einer solchen Position, dass eine der Längskanten einer Hutprofilschiene 108 durch die bewegliche Nase 72 von deren Haltekante 76 und Haltefläche 78 in der Ausnehmung 104 umfasst ist. Die Zylinderdruckfeder 32 stützt sich geräteseitig an dem Feder-Anschlag 52 ab und beaufschlagt den Schieber 10 mit der beweglichen Nase 72 mit einer Kraft in Richtung der Ausnehmung 104.

Zwischen der Gleitschräge der ersten Schieberraste 20 und der zu der sägezahnförmigen ersten Geräterastnase 60 gehörenden Schräge ist ein kleiner Luftspalt 60a, der es erlaubt, dass der Schieber in der ersten Rastposition um eine kleine Strecke in Längsrichtung verschieblich ist. Diese Längsverschieblichkeit, entgegen der Federdruckkraft der Zylinderdruckfeder 32, ist wichtig beim Einrasten des Installationsgerätes auf der Hutprofiltragschiene. Dabei wird eine der Längskanten der Hutprofiltragschiene hinter die feststehende Nase (in Fig. 9 nicht dargestellt) gedrückt, und das Installationsgerät um diese Kante verschwenkt, so dass die andere Kante der Hutprofiltragschiene längs der Nasenschräge 71 entlanggleitet und dadurch den Schieber ein Stück in Richtung auf die Geräteschmalseite 90 hin entgegen der Druckkraft der Zylinderdruckfeder 32 verschiebt, so dass die andere Kante der Hutprofiltragschiene in die Rastposition zwischen der Haltekante 76 und der Haltefläche 78 der beweglichen Nase 72 gleiten kann.

Der Schieber 10 überragt das Installationsgerät 100 an der Schmalseite 90 um die Ausladung L.

Fig. 8 zeigt einen Längsschnitt einer erfindungsgemäßen Schnellbefestigung, wobei sich der bestimmungsgemäß montierte Schieber 10 in der zweiten Raststellung befindet, in der Entnahmestellung. Der Schieber 10 wird mit einem Werkzeug, beispielsweise einem Schraubendreher 5, der in eine Eingriffsöffnung 11 im Schieber 10 im Bereich der Ausladung L eingreifen kann, durch Druck in Pfeilrichtung P verschoben. Die erste Rastnase 20 des Schiebers 10 gleitet dabei über die zu der sägezahnförmigen ersten Geräterastnase 60 gehörende Schräge, bis sie mit der ersten Geräterastnase 60 verrastet ist. Der Schieber ist dadurch in einer solchen Position, dass die bewegliche Nase 72 nicht mehr in die Ausnehmung 104 hineinragt, so dass die Hutprofilschiene 108 frei liegt und das Installationsgerät 100 abgenommen werden kann. Ein noch weiteres Zurückziehen des Schiebers 10 in Richtung der Geräteschmalseite 90 wird dadurch verhindert, dass die zweite Lasche 36 des Schiebers 10 an der Rückwand der taschenförmigen vorderen Nut 44 anstößt.

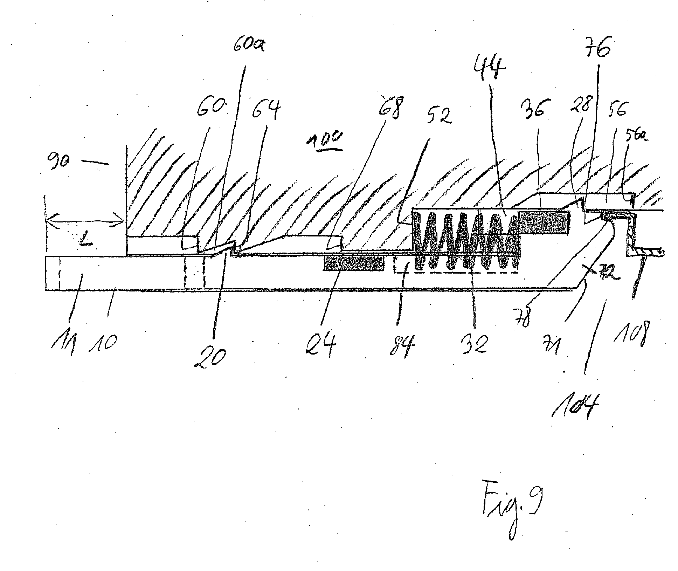

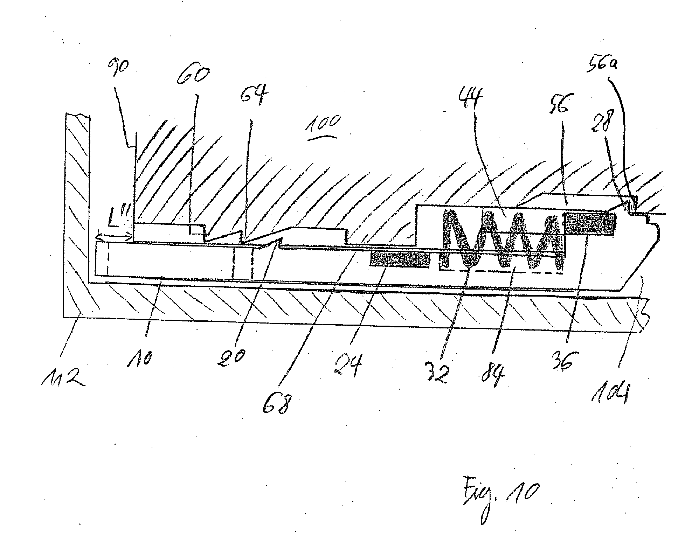

Fig. 10 zeigt einen Längsschnitt einer erfindungsgemäßen Schnellbefestigung, wobei sich der bestimmungsgemäß montierte Schieber 10 in der dritten Raststellung befindet. In dieser dritten Raststellung ist der Schieber 10 in die Ausnehmung 104 hinein verschoben. Die erste Rastnase 20 des Schiebers 10 befindet sich zwischen der zweiten Geräterastnase 64 und dem Vorsprung 68. Die Zylinderdruckfeder 32 ist von der Anschlagsfläche 52 frei geworden, sie ist jetzt nur noch durch ihre Vorspannung in der Haltetasche 84 gehalten. Ein Weiterschieben des Schiebers 10 in die Ausnehmung 104 hinein wird durch das Anstoßen der zweiten Rastnase 28 des Schiebers 10 mit der Rückwand 56 a der in der Befestigungsseite 88 eingebrachten Tasche 56 verhindert.

Durch das Einschieben des Schiebers 10 in die Ausnehmung 104 ist die Ausladung L" an der Geräteschmalseite 90 jetzt so klein geworden, dass das Installationsgerät 100 auf einem Adapter montiert werden kann, ohne dass der Schieber 10 den Adapterhaltevorrichtungen 112 im Wege stehen würde.

Der Schieber 10 mit allen seinen angeformten Elementen kann aus Metall oder aus Kunststoff bestehen. Die Herstellung aus Kunststoff hat den Vorteil der kostengünstigen Herstellung, beispielsweise als Spritzgussteil.

## Patentansprüche

1. Schnellbefestigung zum Aufschnappen eines elektrischen Installationsgerätes (100), insbesondere eines Leitungsschutzschalters, auf eine Hutprofiltragschiene (108), mit einer Ausnehmung (104) an der Befestigungsseite (88) des Installationsgerätes (100) und mit einem in einer ersten Raststellung, der Befestigungslage, federnd in die Ausnehmung (104) gedrückten und in der ersten Raststellung eine über die Geräteschmalseite (90) hinausragende Ausladung L aufweisenden Schieber (10), der in aufgerastetem Zustand mit einer beweglichen Nase (72) hinter eine Längskante der Hutprofiltragschiene (108) greift, **dadurch gekennzeichnet, dass** der Schieber (10) in einer zweiten Raststellung in einer Entnahmelage so verrastbar ist, dass das Installationsgerät (100) von der Hutprofilschiene (108) entnommen werden kann, und dass in einer dritten Raststellung der Schieber (10) in die Ausnehmung (104) hinein verschiebbar ist, so dass in der dritten Raststellung die Ausladung (L") des Schiebers auf ein, eine Montage des Installationsgerätes auf einem Adapter (112) nicht behinderndes, Maß reduziert ist.

2. Schnellbefestigung nach Anspruch 1, **dadurch gekennzeichnet, dass** der Schieber (10) einen rechteckigen Rahmen (12) mit zwei Längsstegen (14), einem an einer ersten Schmalseite angeformten Nasenkörper (70), einem an der anderen Schmalseite angeformten endständigen Quersteg (16) umfasst, und dass der Schieber (10) in etwa eine L-förmige Längsschnittkontur aufweist, wobei der Rahmen (12) den langen Schenkel und der Nasenkörper (70) den kurzen Schenkel bildet.

3. Schnellbefestigung nach Anspruch 2, **dadurch gekennzeichnet, dass** der Schieber (10) mit daran angeformten, parallel zur Befestigungsebene die Längsstege überragenden Laschen (24, 36) in parallel zur Befestigungsebene an der Gerätebefestigungsseite (88) verlaufenden Längsnuten (40, 44) längsverschieblich geführt ist.

4. Schnellbefestigung nach Anspruch 3, **dadurch gekennzeichnet, dass** die Längsnuten (40, 44) durch parallele Hinterschneidungen an der Befestigungsseite (88) gebildet sind.

5. Schnellbefestigung nach einem der vorherigen Ansprüche, **dadurch gekennzeichnet, dass** der Schieber (10) mit, in einer zur Befestigungsebene parallelen, vorderen, und einer im Abstand a dazu ebenfalls zur Befestigungsebene parallelen hinteren Schieberebene (e1, e2), angeformten, Laschen (24, 36) in, in einer zur Befestigungsebene parallelen vorderen Nutebene (e1') an der Gerätebefestigungsseite (88) verlaufenden, vorderen Längsnuten (44), und in, in einer, im Abstand (a) dazu ebenfalls zur Befestigungsebene parallelen, hinteren Nutebene (e2') an der Gerätebefestigungsseite (88) verlaufenden, hinteren Längsnuten (40), längsverschieblich geführt ist.

6. Schnellbefestigung nach Anspruch 5, **dadurch gekennzeichnet, dass** die der Gerätebefestigungsseite (88) zugewandte Begrenzungsfläche (73) des Nasenkörpers (70) in der vorderen Schieberebene (e1) liegt, und dass die der Gerätebefestigungsseite (88) zugewandte Begrenzungsfläche (13) des Rahmens (12) in der hinteren Schieberebene (e2) liegt.

7. Schnellbefestigung nach einem der vorigen Ansprüche, **dadurch gekennzeichnet, dass** an dem Schieber in der vorderen Schieberebene (e1) eine erste, der Gerätebefestigungsseite (88) zugewandte Rastnase (28) und in der hinteren Schieberebene (e2) eine zweite, der Gerätebefestigungsseite (88) zugewandte Rastnase (20) angeformt sind.

8. Schnellbefestigung nach Anspruch 7, **dadurch gekennzeichnet, dass** korrespondierend mit der zweiten Rastnase (20) des Schiebers (10) an der Gerätebefestigungsseite (88), dem Schieber (10) zugewandt und in Längsrichtung hintereinanderliegend, eine erste, nahe zur Geräteschmalseite (90), und eine zweite, nahe zur Ausnehmung (104) gelegene Geräterastnasen (60, 64) angeformt sind, derart dass bei Verrastung der ersten Schieberrastnase (20) mit der ersten Geräterastnase (60) der Schieber in der zweiten Raststellung, der Entnahmelage, verrastet ist, und bei Verrastung der ersten Schieberrastnase (20) mit der zweiten Geräterastnase (64) der Schieber (10) in der ersten Raststellung, der Befestigungslage, verrastet ist.

9. Schnellbefestigung nach Anspruch 7, **dadurch gekennzeichnet, dass** korrespondierend mit der ersten Rastnase (28) des Schiebers (10) an der Gerätebefestigungsseite (88), dem Schieber (10) zugewandt, eine Tasche (56) eingebracht ist, in der die erste Rastnase (28) längsverschieblich gleitet, derart dass der Längsverschiebebereich des Schiebers (10) auf den Bereich der Längserstreckung der Tasche (56) begrenzt ist.

10. Schnellbefestigung nach einem der vorherigen Ansprüche, **dadurch gekennzeichnet, dass** die erste und zweite Rastnase (28, 20) auf dem Schieber (10), die erste und zweite Gerätenase (60, 64), die Tasche (56) und die in den vorderen und hinteren Längsnuten (44, 40) verlaufenden vorderen und hinteren Laschen (36, 24) so miteinander korrespondieren, dass der Schieber (10) in eine dritte Raststellung bringbar ist, in der die Ausladung (L") des Schiebers auf ein, eine Montage des Installationsgerätes auf einem Adapter (112) nicht behinderndes, Maß reduziert ist, sich die zweite Rastnase (20) zwischen der zweiten Gerätenase (64) und der Ausnehmung (104) befindet und die bewegliche Nase (72) in die Ausnehmung (104) hineinragt, wobei der Längsverschiebebereich des Schiebers (10) in die Ausnehmung (104) hinein durch den Längserstreckungsbereich der Tasche (56) so begrenzt ist, dass die vorderen und hinteren Laschen (36, 24) die vorderen und hinteren Längsnuten (44, 40) nicht verlassen können.

11. Schnellbefestigung nach einem der vorigen Ansprüche, **dadurch gekennzeichnet, dass** der Schieber (10) von einer, in einer in dem Schieber eingebrachten Haltetasche gehaltenen, Schraubendruckfeder in Richtung auf die Ausnehmung (104) beaufschlagt ist.

12. Schnellbefestigung nach einem der vorigen Ansprüche, **dadurch gekennzeichnet, dass** der Schieber (10) mit den angeformten Laschen (20, 24) und Rastnasen (20, 28) ein Kunststoffteil ist.

13. Schnellbefestigung nach einem der vorigen Ansprüche, **dadurch gekennzeichnet, dass** der Schieber (10) einen mittleren Quersteg (18) zur Versteifung umfasst.

14. Schnellbefestigung nach einem der vorigen Ansprüche, **dadurch gekennzeichnet, dass** der Schieber (10) im Bereich der über die Geräteschmalseite (90) hinausragenden Ausladung L eine Eingriffsöffnung (11) für ein Werkzeug umfasst.

15. Schnellbefestigung nach einem der vorigen Ansprüche, **dadurch gekennzeichnet, dass** der Schieber (10) mit dem Werkzeug, insbesondere einem Schraubendreher, zwischen der ersten, zweiten und dritten Raststellung verschiebbar ist.
